# EUROPEAN PATENT SPECIFICATION

(11) **EP 0 704 291 B1**
(45) Date of publication and mention of the grant of the patent: **17.11.1999**
(21) Application number: 95306760.0
(22) Date of filing: 26.09.1995
(51) Int. Cl.: B29C 45/17, B29C 45/00, B29C 37/00, B29C 69/00

(54) **Manufacturing method of hollow structural member and hollow structural member**
Verfahren zur Herstellung eines hohlen Strukturelements und hohles Strukturelement
Procédé de fabrication d'un élément de structure creux et élément de structure creux

(30) Priority: 28.09.1994 JP 23288594; 08.02.1995 JP 2038695
(43) Date of publication of application: 03.04.1996
(73) Proprietor: MATSUSHITA ELECTRIC INDUSTRIAL CO., LTD., Kadoma-shi, Osaka-fu 571 (JP)
(72) Inventor: Kodama, Kazuhiko, Kyoto-shi, Kyoto, 612 (JP); Shimizu, Kaoru, Osaka-shi, Osaka, 535 (JP)
(74) Representative: Crawford, Andrew Birkby

(56) References cited:
- DE-A- 4 202 306
- DE-A- 4 240 017
- GB-A- 2 218 937
- PATENT ABSTRACTS OF JAPAN vol. 17 no. 664 (M-1523) ,8 December 1993 & JP-A-05 220777 (OKASHIRO KANAGATA KASEI KK) 31 August 1993,
- PATENT ABSTRACTS OF JAPAN vol. 7 no. 250 (M-254) [1395] ,8 November 1983 & JP-A-58 134721 (ARON KASEI KK) 11 August 1983,

## Description

### Background of the Invention

### Industrial Field of Utilization

The present invention relates to a hollow structural member used in a set table for mounting a television receiver (TV hereinafter), and a casing of electronic component or electronic appliance, or the like.

### Prior Art

Hitherto, as the structure of a set table for mounting TV or the casing of an electronic appliance, hollow structural members having a plurality of independent hollow parts or communicating hollow parts have been known.

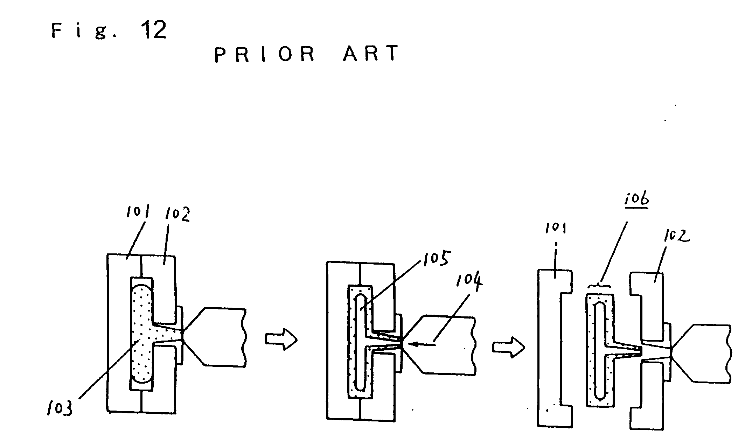

Such hollow structural members are made of plastics, and are manufactured by gas-assisted injection molding for molding hollow parts by gas. Its purposes are saving of molding cost, reduction of weight of molded products, improvement of quality, and molding at low pressure. Fig. 12 shows an outline of processing chart of a conventional manufacturing method of hollow structural member. In Fig. 12, molten plastic 103 is poured in between a first die 101 and a second die 102. BY injecting gas 104 into the molten plastic 103, a hollow part 105 is formed. Then it is solidified by cooling. The solidified hollow structural member 106 is taken out from the first die 101 and second die 102.

To manufacture structural members having conductive layers, the following methods are known.
(a) A method of applying a conductive paint on an outer surface of a solid box or a hollow structural member.
(b) A method of forming a thin conductive metal film by vapor deposition, plating or sputtering, on an outer surface of a solid box or a hollow structural member.
(c) A method of adhering a thin conductive metal plate. on an outer surface of a solid box or a hollow structural member.
(d) A method of forming a conductive structural member, by injection molding of a material of compound plastics containing a conductive filler.
(e) A method of injection molding a hollow structural member, injecting a liquid conductive substance into the hollow part of a solidified structural member, and drying the liquid substance, thereby depositing a conductive layer.

In methods (a) to (c), it is hard to obtain a structural member of complicated shape, and therefore they cannot be flexibly applied to varied designs of the casing for composing electronic appliances. Besides, these methods required many processes, and the cost cannot be lowered.

In method (d), the resin flowability is poor, and the molding performance and surface state of molded product are Poor.

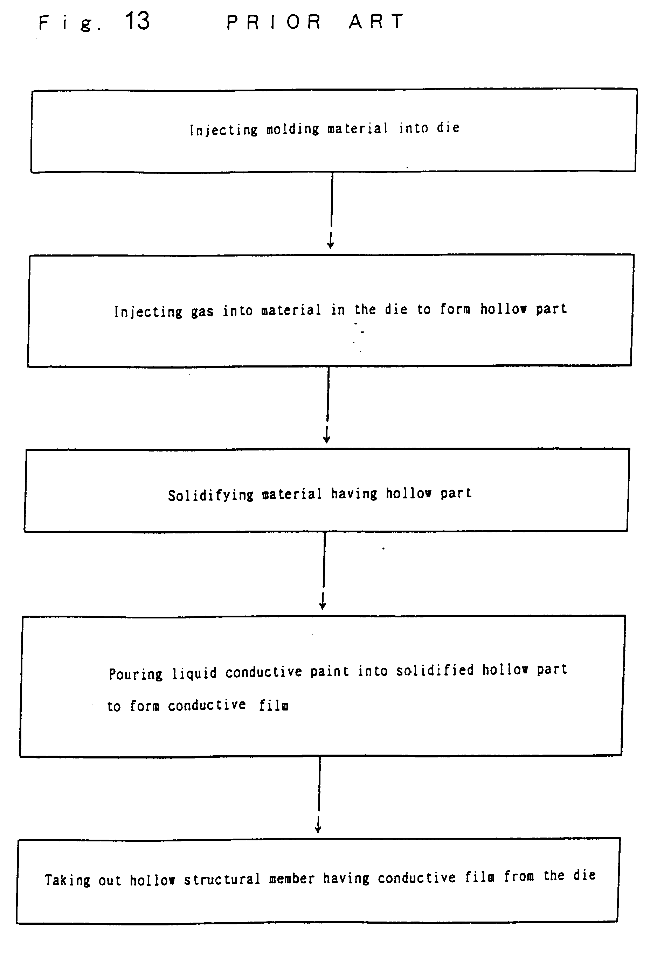

A manufacturing process chart of method (e) is shown in Fig. 13.
(1) First, molten resin is injected into the die.
(2) Then, gas is injected before the molten resin is solidified, and a hollow part is formed.
(3) The molten resin forming a hollow part is solidified.
(4) Next, a conductive liquid paint is injected into the solidified hollow part.
(5) The conductive liquid paint is cured by heating.
(6) The solidified resin forming the conductive paint in the hollow part is taken out of the die.

In method (e), after the molten resin injected into the die is cooled and solidified, a conductive liquid is poured into the hollow part, and it requires the time for drying the liquid injected into the hollow part, in addition to the time of solidifying the resin poured into the die. Therefore, the molding cycle is long, and the productivity is poor.

Other prior art hollow structural members and methods of manufacturing thereof have previously been proposed in, for example, DE-A-4202306. These prior art hollow structural members are however characterised in that no functional means are deposited on the inside surface of the hollow part.

Further methods of producing molded hollow articles with internal functional layers have also been previously proposed. In particular DE-A-4240017 discloses a method of blow-out molding where a chemically active gas is used to both mold the article and chemically deposit an inner wall lining on the inner wall of the molded article. Thus the injection gas itself creates a functional layer in the inner wall as it forms the hollow. This method is of course limited to creating functional layers of material which can be chemically etched. No physical deposition of a functional layer is possible.

JP-A-05270777 abstract also discloses a method for molding synthetic resin material into a hollow article, wherein a resin layer can be laminated to the inside of the molded hollow article. In this case, the molded hollow article is formed in a conventional manner and allowed to cool and solidify. A resin material is then injected into the solid article and a further step of injecting gas is performed to laminate the resin to the inside of the hollow article. This method therefore presents many process steps thus increasing the production time and increasing costs.

It is hence an object of the invention to present a manufacturing method of hollow structural member capable of obtaining a molded product having an excellent surface state and a superior appearance, and shortening the molding cycle at the same time, and having the function for manufacturing easily and at low cost.

### Summary of the Invention

According to the present invention, there is provided a manufacturing method for a hollow structural member comprising:
(a) a step of pouring a molding material into a die;
(b) a first injection step of injecting gas into the material to form at least one hollow part in the material,
   said method being characterised by further providing:-
(c) a second injection step of injecting a substance having a function into the hollow part within the material to physically deposit a functional means onto the inside surface of the hollow part before the molding material is fully solidified;
(d) a step of solidifying both the material having the hollow part and the functional means deposited on the inside surface of the hollow part to form a structural member, and
(e) a step of removing the solidified structural member containing the functional means deposited on the inside surface of the hollow part from the die.

In the manufacturing method, the structural member is not particularly defined, but thermoplastic plastic, thermosetting plastic, rubber, inorganic mater, ceramics, compound plastic containing filler, and others may be used.

The molding material is a starting material of the structural member. For example, in the case of thermoplastic plastic, the material is in molten state by heating. In the case of thermosetting plastic, the material is in fluid state. In the case of inorganic matter or ceramics, the material is a mixture of powder of inorganic substance and solvent. In the case compound plastic containing filler, the material is in fluid state.

Gas is injected into the material before the material is solidified.

The substance having a function is injected into the material before the material is solidified. As the substance having a function, magnetic substance, conductive substance, antibacterial substance or the like may be used.

The timing of injecting the substance having a function into the material is not particularly defined. For example, the substance having a function is injected together with gas from different nozzles. Alternatively, the substance having a function is injected after the injection of gas.

The shape of the plurality of hollow parts is not particularly defined, but cross form such as x-shape and + shape, Y form, tee form, concentric form , radial form, and other forms mutually isolated by partition wall or the like are preferred.

By such a manufacturing method, a molded product having an excellent surface state and superior appearance can be obtained, and at the same time, moreover, the molding cycle is short, and the hollow structural member having the functional performance can be manufactured easily and at low cost. In particular, excellent effects are obtained when manufacturing a structural member having a plurality of hollow parts and forming functional means on the surface of each hollow part.

### Brief Description of the Drawings

Fig. 1 is a process chart showing an embodiment of manufacturing method of a hollow structural member of the invention.
Fig. 2 is a process chart showing a different embodiment of manufacturing method of a hollow structural member of the invention.
Fig. 3 is an explanatory diagram showing a further different embodiment of the invention, particularly showing a manufacturing method by injection molding.
Fig. 4 is a process chart showing a still different embodiment of manufacturing method of a hollow structural member of the invention.
Fig. 5 is a process chart showing a still other embodiment of manufacturing method of a hollow structural member of the invention.
Fig. 6 is a perspective exploded view before assembly of a television stand using a hollow structural member manufactured by an embodiment of the invention.
Fig. 7A is a plan view of a hollow structural member obtained by an embodiment of the invention.
Fig. 7B is a sectional view from the direction of section line S1-S1 shown in Fig. 7A.
Fig. 8A is a plan view of a hollow structural member obtained by other embodiment of the invention.
Fig. 8B is a sectional view from the direction of section line S2-S2 shown in Fig. 11A.
Fig. 9A is a plan view of a hollow structural member obtained by a different embodiment of the invention.
Fig. 9B is a sectional view from the direction of section line S3-S3 shown in Fig. 9A.
Fig. 10A is a plan view of a hollow structural member obtained by a further different embodiment of the invention.
Fig. 10B is a sectional view from the direction of section line S4-S4 shown in Fig. 10A.
Fig. 11A is a plan view of a hollow structural member obtained by a still different embodiment of the invention.
Fig. 11B is a magnified sectional view of a base part of Fig. 11A.
Fig. 12 is a process chart showing a conventional manufacturing method of hollow structural member.
Fig. 13 is a process chart showing other conventional manufacturing method of hollow structural member.

### Description of the Preferred Embodiment

Referring now to the drawings, some of the embodiments of the invention are described in detail below.

### Embodiment 1-1

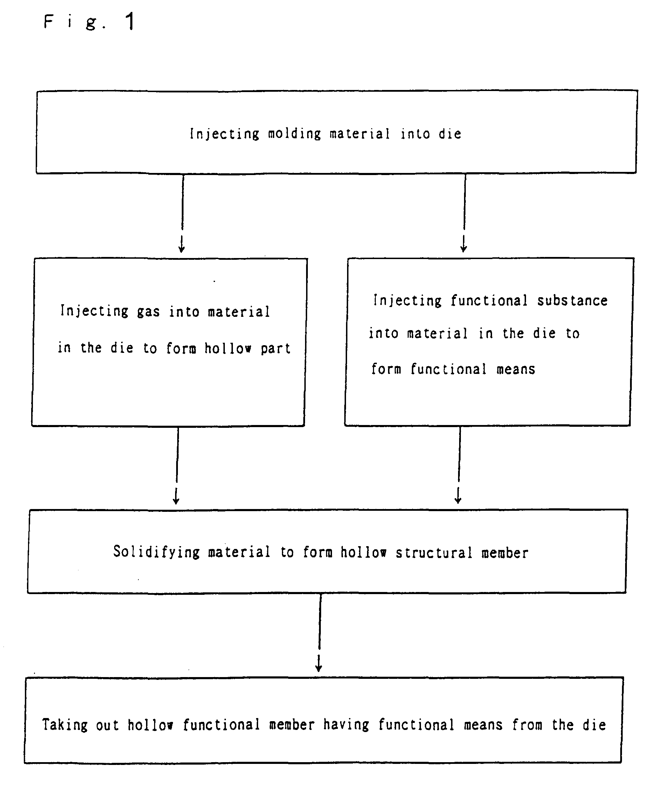

Fig. 1 shows an outline of manufacturing process in an embodiment of manufacturing method of hollow structural member of the invention. In Fig. 1, it is characterized by:
(1) pouring a molding material into a cavity of a die,
(2) injecting a substance having a function and a gas simultaneously and separately from different nozzles before the material is solidified, thereby forming a hollow part in the material and simultaneously forming functional means on the inner surface of the hollow part,
(3) solidifying the material forming the hollow part, and
(4) taking out the solidified structural member forming the functional means in the hollow part, from the die.

### Embodiment 1-2

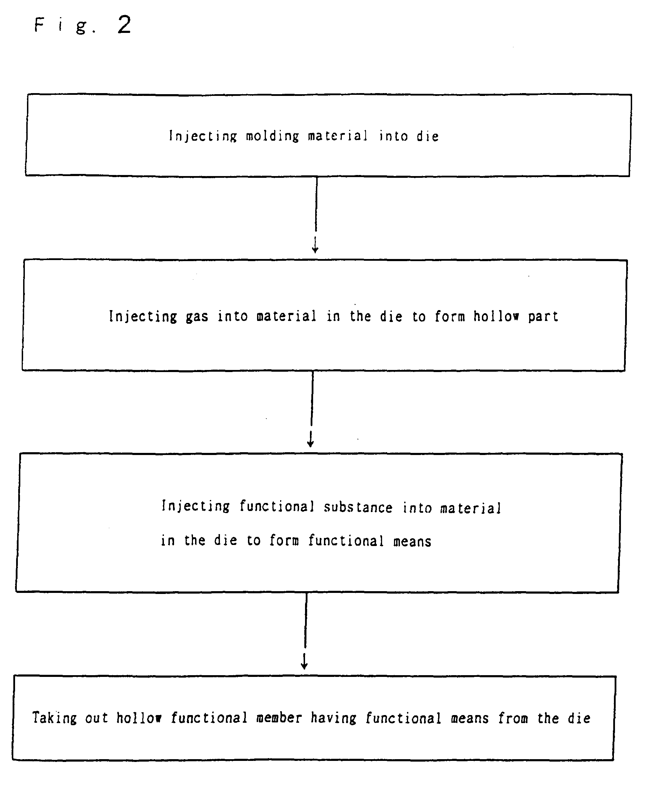

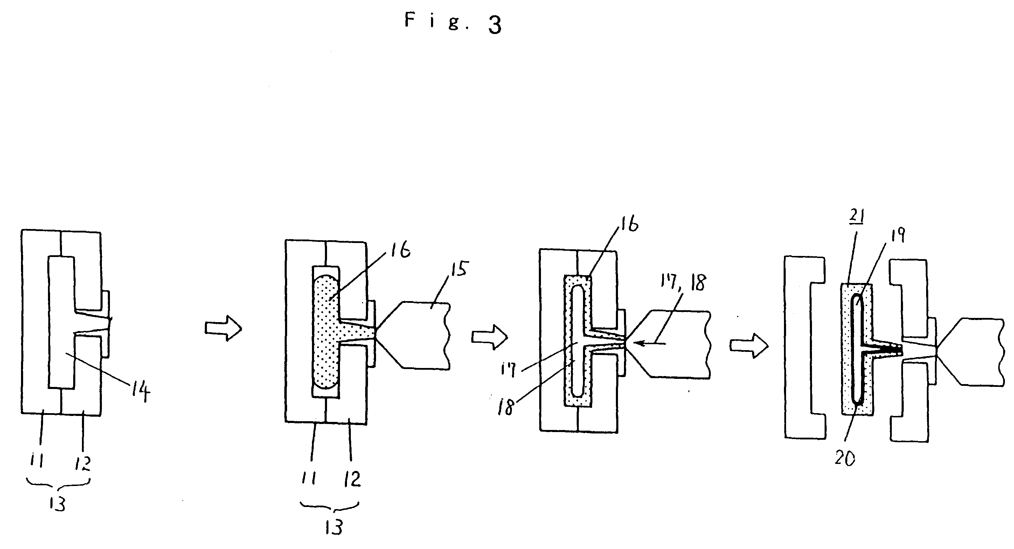

Fig. 2 shows an outline of manufacturing process in another embodiment of manufacturing method of hollow structural member of the invention. In Fig. 3, it is characterized by:
(1) pouring a molding material into a cavity of a die,
(2) injecting a gas before the material is solidified, thereby forming a hollow part in the material,
(3) injecting a substance having a function into the hollow part before the material is solidified, thereby forming functional means on the inner surface of the hollow Part,
(4) solidifying the material forming the hollow part, and
(5) taking out the solidified structural member forming the functional means in the hollow part, from the die.

### Embodiment 2

Relating to embodiments 1-1, and 1-2, a manufacturing method by gas-assisted injection molding using thermoplastic plastic as material is described in a further specific embodiment. Fig. 3 is a diagram explaining an outline of a manufacturing method of hollow structural member by injection molding. In Fig. 3, first, a molten resin 16 is poured from a nozzle 15 into a cavity 14 of a molding die 13 composed of a fixed die 11 and a movable die 12. The die 13 is structured so as to form one hollow part of a simple shape, or one hollow part communicating in a complicated shape, or a plurality of internally independent hollow parts by partition plates (partition walls) or the like crossing in a cross or tee form. An insufficient amount of molten resin 16 for filling up the cavity 14 is poured into the cavity 14. In succession. from a nozzle 15, a gas 17 and a functional substance 18 are poured in. In this case, by injecting the gas 17 while injecting the molten resin 16, the cavity 14 can be fully filled up with the molten resin 16. The gas 17 and the functional substance 18 can be poured at the same time. Alternatively, the functional substance 18 can be injected after injection of the gas 17. The nozzle for injecting the molten resin 16, gas 17 or functional substance 18 may be arbitrarily disposed at plural positions, not limited to one position. Furthermore, the nozzle for injecting the molten resin 16, the nozzle for injecting the gas 17, and the gas for injecting the functional substance 18 may be either shared, or disposed independently. Afterwards, the molten resin 16 having a hollow part 19 and functional means 20 formed on the inner surface of the hollow part 19 is cooled and solidified. Finally, a solidified structural member 21 having the hollow part 19 and the functional means 20 formed on the inner surface of the hollow part 19 is taken out of the die 13.

### Embodiment 3

In the gas-assisted injection molding technique of embodiment 2, the following die composition may be employed as the means for disposing a plurality of independent hollow parts. That is, together with gas assisting, in order to form crossing partition walls in cross form such as X shape and + shape, Y form, tee form, plural partition plates or pins are incorporated in the movable die 12 so as to be free to move in and out. The gas 17 and the functional substance 18 can be poured at the same time, or alternatively the functional substance 18 can be injected after injection of the gas 17. Furthermore, before forming the partition wall, by forming the functional means 20 preliminarily inside of the hollow part 18 and the composing the partition walls crossing in cross form or tee form, if the hollow parts 18 are individually independent, the functional means 20 formed in these hollow parts 18 are mutually connected.

### Embodiment 4

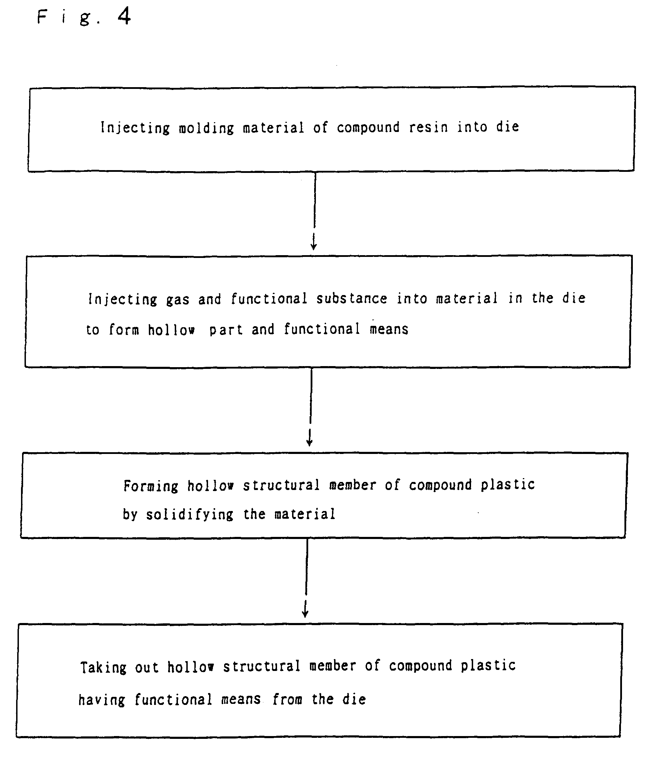

Fig. 4 is a diagram explaining a different manufacturing method of hollow structural member of the invention, showing the outline of a process of hollow structural member of compound plastics, by using compound resin containing conductive filler or magnetic filler. In Fig. 4, it is characterized by:
(1) injecting a material of compound resin containing conductive filler or magnetic filler into a cavity of a die,
(2) injecting a functional substance and a gas before the material is solidified, thereby forming a hollow part in the material, and simultaneously forming functional means on the inside surface of the hollow part,
(3) solidifying the material forming the hollow part, and
(4) taking out the solidified structural member forming the functional means in the hollow part, from the die.

### Embodiment 5

An embodiment of using ceramics as a structural member is described below.

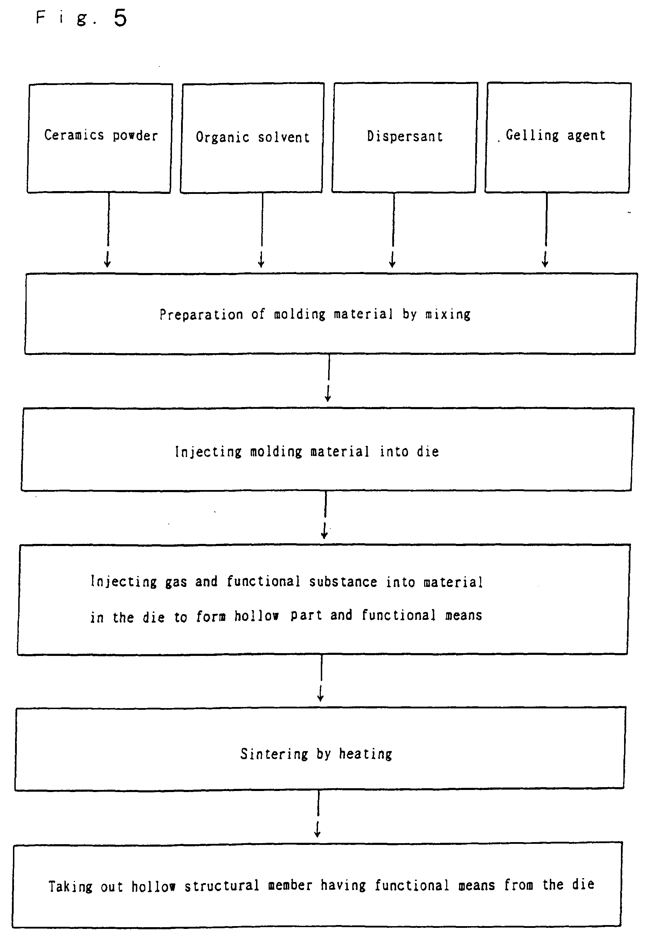

Fig. 5 shows a manufacturing process of hollow structural member according to a further different embodiment of the invention, which comprises the steps of:
(1) mixing ceramics powder mixing silicon nitride, alumina, and yttria, an organic solvent such as alcohol, paraffin or hydrocarbon, a dispersant such as polyethylene alkyl ether phosphate or polyethylene glycol alkyl ether, and a gelling agent of fatty acid containing hydroxy group,
(2) pouring a material their mixture into a die,
(3) injecting a mixture of ferrite powder and nitrogen gas into the mixture in the die, thereby forming a hollow part, and simultaneously forming a functional film on the surface of the hollow part,
(4) heating to about 500 deg. C to solidify the material, and
(5) sintering, thereby obtaining a hollow structural member having a magnetic layer in the hollow part.

The functional means is not particularly defined, but, for example, magnetic member, conductive member, antibacterial member, or stiff member may be composed.

The magnetic member is not particularly defined, but, for example, soft magnetic material such as iron oxide and ferrite, stiff magnetic material such as barium ferrite and strontium ferrite, magnetic metal such as iron, silicon and nickel, and magnetic alloy such as iron-nickel, iron-silicon, iron-cobalt, and iron-aluminum can be used. The material of such magnetic member is used in powder or fiber form, and by injecting a gas containing such magnetic powder into the hollow part, a magnetic layer is disposed on the inside of the hollow part. Or by spraying a paint mixing the magnetic powder with binder, solvent or other resin member, a magnetic coat film is formed. The magnetic layer or magnetic member of such magnetic layer absorbs electromagnetic waves from outside, and works to attenuate or extinguish the electromagnetic waves.

The conductive member is not particularly defined, but, for example, silver, copper, brass, iron, zinc, aluminum, nickel, stainless steel, or carbon may be used. The material of such conductive member is used in powder or fiber form, and by injecting a gas containing such conductive powder into the hollow part, a conductive layer is disposed on the inside of the hollow part. Or by spraying a paint mixing the conductive powder with binder, solvent or other resin member. a conductive coat film is disposed on the inside of the hollow part. The conductive layer or conductive member of such conductive layer works to reflect the electromagnetic waves from outside.

The shape of the material of magnetic member or conductive member is not particularly defined, but, for example, size and shape suited to mixing with high pressure gas. or size and shape suited to containing conductive paint may be employed. The thickness of the layer of the functional means disposed on the surface of the hollow part is not particularly defined, but it may be, for example, 1 micrometer or more. Especially when used as the means for shielding the electromagnetic waves, the thickness of the conductive member is desired to be about 1 micrometer or more, and the thickness of the conductive member is preferred to be about 10 micrometers or more.

The particle size of the powder is not particularly defined, but, for example, it may be about 0.1 micrometers to about 100 micrometers, and especially about 0.5 micrometers to about 20 micrometers may be preferred. The diameter of fiber is not particularly defined, but. for example, about 1 micrometer to 100 micrometers may be preferred. The length of fiber is not particularly defined, but, for example, about 0.5 millimeters to about 10 millimeters may be preferred.

As the antibacterial member, antibacterial zeolite, chitosan, tannin, or tropolone may be used. The antibacterial zeolite contains bactericidal substance such as silver copper and zinc in its fine pores, and is effective to cut off the survival environments for the depositing bacteria. When added to plastics such as polypropylene, it is effective by adding by several percent. Chitosan is contained in the shells of crabs and shrimps. and possesses antibacterial and antifungal activities. When added to plastics, it is effective at about 0.3% to about 3%. Powder with particle size of about 5 micrometers or less is used. Tannin is contained in mugwort, and has antiallergic or analgesic effect. Chlorophyll is contained in plant, and has a bactericidal effect. A microcapsule of particle size of about 0.5 micrometers to about 20 micrometers containing extract of mugwort is used. Tropolone is contained in hinoki cypress, and has a preservative effect to prevent bacteria or fungi. A microcapsule containing tropolone is used.

Moreover, the conductive paint may be mixed with arbitrary solvent such as alcohol, toluene, thinner and acetone, or with PVA (polyvinyl alcohol), or the like. The conductive paint may also contain a specified amount of desired resin member, such as epoxy resin, acrylic resin, vinyl chloride resin, ABS resin, PS resin, polyamide resin, polycarbonate resin, styrene resin, or other thermoplastic resin.

In gas-assisted injection molding of hollow structural member, the gas to be blown for forming the hollow part is not particularly defined, but, for example, nitrogen, carbon dioxide, air or other inert gas may be used. At the same time, a substance having a boiling point below the ordinary temperature or a substance liquefied at high pressure may be also used.

The material of hollow structural member is not particularly defined, but, for example, thermoplastic plastic, thermosetting plastic, rubber, inorganic matter, ceramics, and compound plastic containing filler may be used. For example, as the thermoplastic plastic, polypropylene, polystyrene, ABS resin, polyethylene, acrylic resin, and polyethylene terephthalate may be used. Usable examples of thermosetting Plastic include phenol resin. epoxy resin, melamine resin, and polyester fiber. As the rubber, silicone rubber, butadiene rubber, butyl rubber, fluorine, copolymerization rubber or others may be used. As ceramics. False Stellite, alumina, silicon nitride or others may be used, and as the material, mixtures of ceramics powder with solvent, organic binder, surfactant, thickener and others may be used As the solvent, water, polyvinyl alcohol, alcohol, toluene or others may be used. The compound plastic containing filler may include plastics mixing powder of silica, alumina, calcium carbonate, glass fiber, balloon (hollow matter made of glass, metal, ceramics, etc.) or others. In particular, the compound plastic containing balloon is effective for reducing the weight. Biodegradable plastics include, for example, denatured protein member such as gluten, kneaded member of paper and denatured protein, agar member, member of potato starch kneaded in water, natural high polymer novamont (tradename Materbie of Nippon Gosei Kagaku), microorganism producing polyester system ICI (tradename Biopole of ICI Japan), chemically synthesized aliphatic polyester (tradename Vionolet of Showa Kobunshi) and others.

By the above manufacturing method, molded products having excellent surface state and superior appearance can be obtained, and at the same time the molding cycle is short, and hence the hollow structural member having a functional property can be manufactured easily and at low cost. In particular, excellent effects are obtained when manufacturing a structural member having a plurality of hollow parts, and forming functional means on the surface of the hollow parts. Besides, the characteristics of the resin member used in injection molding are not altered. For example, without changing the molding properties of the resin member, arbitrary structures and curved shapes can be composed depending on the diversity of design and purposes of use. The functional means can be composed only in a necessary region of the structural member. Moreover. since the hollow part and functional means can be formed simultaneously, the material cost or manufacturing processes can be reduced.

### Embodiment 6

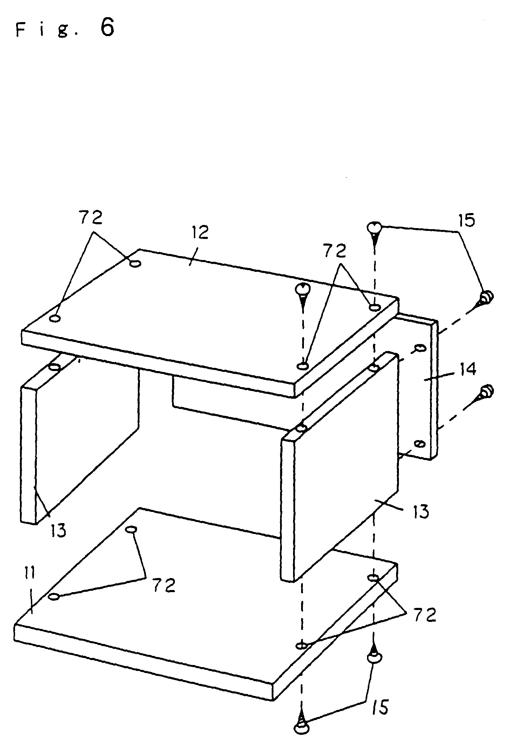

To obtain a set stand having a function of mounting an electronic appliances such as television receiver and shielding electromagnetic waves (hereinafter called TV stand), an embodiment of manufacturing method of hollow structural member of the invention is described below. Fig. 6 is a perspective exploded view before assembly of the TV stand using a hollow structural member obtained from the manufacturing method in an embodiment of the invention. In Fig. 6, the TV stand is composed of five hollow structural members, that is, bottom plate 11, top plate 12, side plates 13, and rear plate 14, and these hollow structural members are mutually coupled by coupling screws 15 and assembled. Inside the TV stand, the video tape recorder (VTR), BS tuner, CS tuner and other electronic appliances are accommodated (not shown). Electromagnetic waves from outside are shielded by this TV stand. At the four corners of the hollow structural member composing the bottom plate 11, top plate 12 and rear plate 14. stepped penetration holes 72 considering positioning between members are disposed at four points. The plurality of hollow parts formed in the structural members are formed at positions not affecting the strength. close to the stepped penetration holes 72.

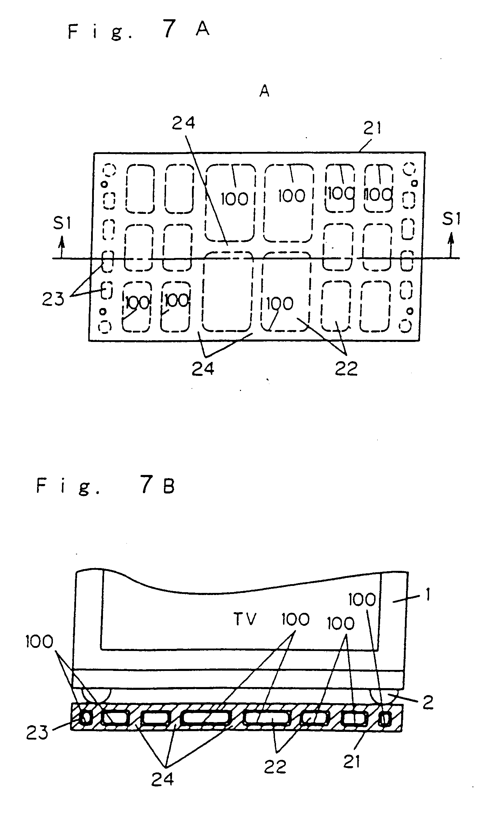

Figs. 7 to 11 show various embodiments of the hollow structural member of the invention. The hollow structural members of the illustrated embodiments are manufactured by gas-assisted injection molding, or integral molding by primary molding and secondary molding. The hollow structural member manufactured by integral molding has one hollow part of a plurality of hollow parts in its inside, and an electromagnetic wave shielding member is formed inside of the hollow part in a film or layer form.

### Embodiment 6-1

Fig. 7A and Fig. 7B show one embodiment of the invention. and Fig. 7A is a plan view of a hollow structural member composing the top plate of the TV stand, and Fig. 7B is a sectional view seen from the direction of line S1-S1 of Fig. 7A. The top plate 21 is intended to reduce the weight and function to cut off electromagnetic waves. In the portion requiring a large strength, that is, in the portion located below the base part 2 of the television receiver 1 and receiving its load, a hollow Part 23 having a small volume is formed, and in the portion not directly provided with load, a hollow part 22 having a large volume is formed, and the small hollow part 22 and large hollow part 23 are disposed in specific shapes by mutually crossing partition walls 24. In this embodiment, by symmetrically disposing three types of hollow parts differing in size, the weight of the top plate 21 is reduced. At the inner side of the small hollow part 22 and large hollow part 23, conductive members 100 having electromagnetic wave shielding function are displayed in a thin film or layer form. The means for disposing the conductive members 100 can be formed in one of the foregoing embodiments 1 to 6. By keeping the total occupancy of the hollow parts in a range of 20 to 90% of the volume of the outer circumference of the top plate 21, the resin material is saved, and the cost is lowered. The rate of total occupancy of the hollow parts may be determined depending on the purpose of use, required strength and resin material for composing the hollow structural member. To form a plurality of independent hollow parts, as shown in Fig. 7A, partition walls are formed in a cross form or tee form, but the partition walls are not limited to cross form or tee form, but partition walls may be constituted in arbitrary forms.

### Embodiment 6-2

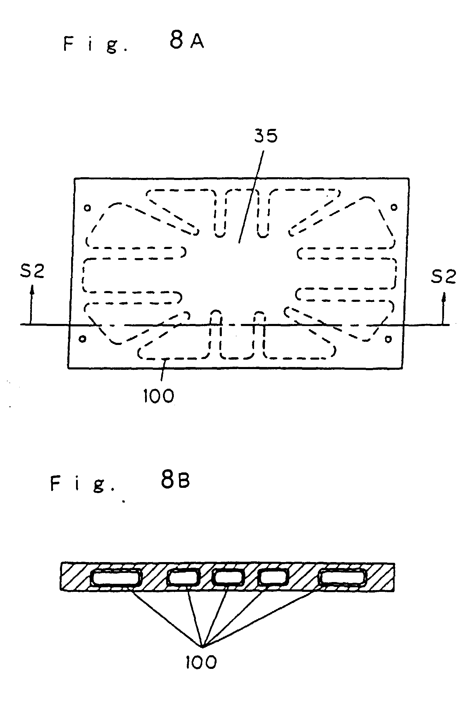

Figs. 8A and 8B show other embodiment of the invention, and Fig. 8A is a plan view of a hollow structural member for composing the top Plate, bottom plate or side plates of the TV stand, and Fig. 8B is a sectional view seen from direction of line S2-S2 of Fig. 8A. The hollow structural member shown in Figs. 8A and 8B is reduced in weight, and has a radial hollow part 35. In the structural member having a radial hollow part, when the load is applied almost uniformly on the entire surface of the structural member, the stress is uniformly dispersed, and as a result the molded piece is free from warp or deflection. Electromagnetic wave shielding means 100 is disposed at specified position at the inner side of the hollow part 35.

### Embodiment 6-3

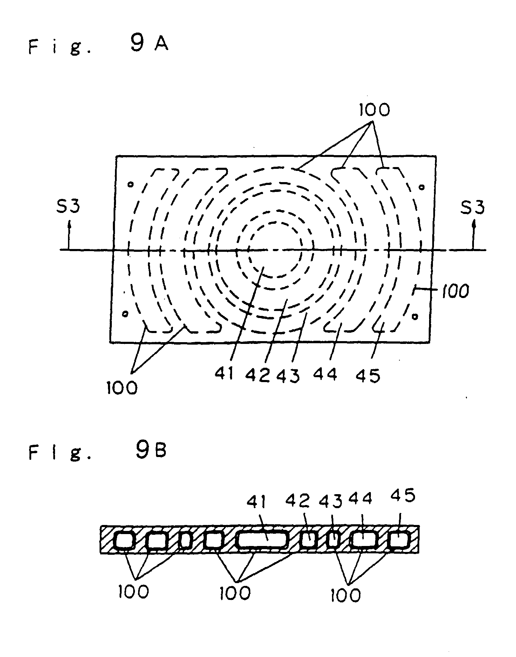

Figs. 9A and 9B show other embodiment of the invention, and Fig. 9A is a plan view of a hollow structural member for composing the top plate, bottom plate or side plates of the TV stand, and Fig. 9B is a sectional view seen from direction of line S3-S3 of Fig. 9A. The hollow structural member shown in Figs. 9A and 9B is reduced in weight, and has concentric hollow parts. The concentric hollow parts consist of, concentrically from the center to the outer circumference, a circular hollow part 41, annular hollow parts 42, 43, and arcuate hollow parts 44, 45. In the structural member having concentric hollow parts, when the load is applied to the center of the structural member. the stress is uniformly dispersed, so that the molded piece is free from warp or deflection. Electromagnetic wave shielding means 100 is disposed at specified position at each inner side of the circular hollow part 41, annular hollow parts 42, 43, and arcuate hollow parts 44, 45.

### Embodiment 6-4

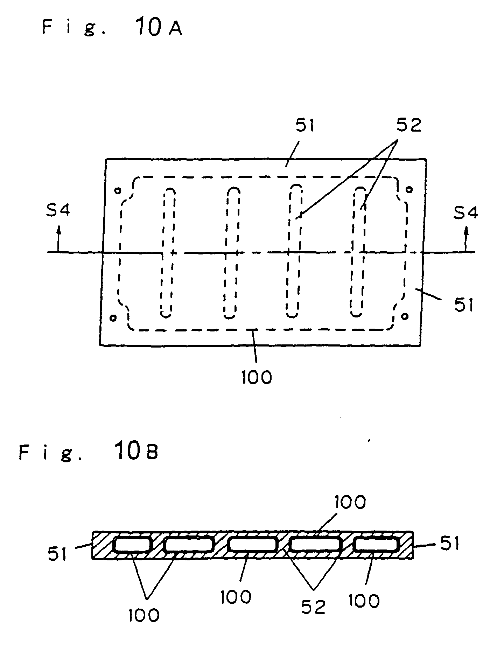

Figs. 10A and 10B show other embodiment of the invention, and Fig. 10A is a plan view of a hollow structural member for composing the top plate, bottom plate or side plates of the TV stand, and Fig. 10B is a sectional view seen from direction of line S4-S4 of Fig. 10A. The hollow structural member shown in Figs. 10A and 10B is reduced in weight, and has four reinforcing ribs. The four reinforcing ribs 52 disposed in the center are composed so that the peripheral side wall thickness 51 may be greater than the wall thickness of the reinforcing ribs 52 when a load is applied to the peripheral edge of the structural member. The reinforcing ribs 52 prevent warp, deflection or shrinkage of the molded piece. At the inner side of the hollow part, electromagnetic wave shielding means 100 is disposed at specified position.

### Embodiment 6-5

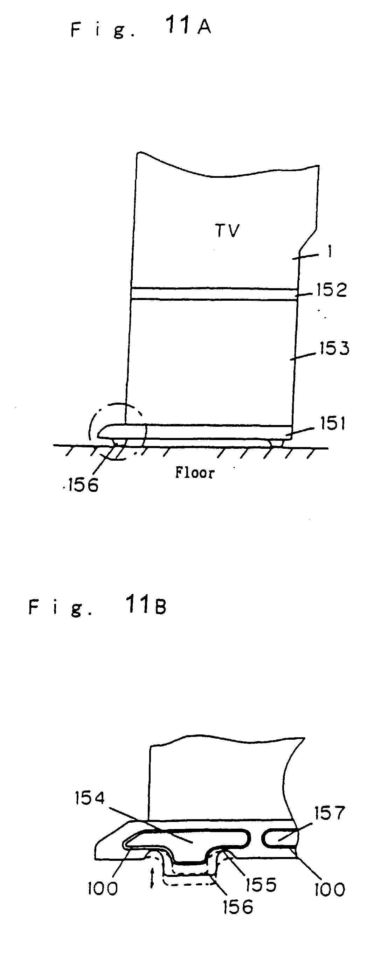

Figs. 11A and 11B show a different embodiment of the invention, and Fig. 11A is a side view of a TV stand mounting the television receiver, and Fig. 11B is a magnified sectional view of base part of Fig. 11A. At specified positions of a hollow structural member composing a bottom plate 151 of TV stand, an elastic base part 156 for absorbing vibration from outside is disposed at four positions. The elastic base part 156 has a hollow part 154 of a nearly T-shape section at four corners of the bottom plate 151. The elastic base part 156 has arcuate thin wall parts 155 formed symmetrically in order to have an elasticity of same function as compression spring. When vibration is given from outside, by deflecting in the arrow direction from the broken line position to the solid line position, the vibration is absorbed or alleviated. At the inner side of the hollow parts 154, 157, electromagnetic wave shielding means 100 is disposed at specific positions.

Thus, according to embodiments 6-1 to 6-5, the TV stand having excellent electromagnetic wave shielding means and excellent in mechanical strength against load from outside is obtained.

Besides, by setting the size and shape of the hollow parts as specified, a required mechanical strength can be obtained as desired by varying the value in every position of the same structural member.

Besides, because of integral molding, joining or assembling parts is not needed.

In the foregoing embodiments, the hollow structural members for composing the TV stand are described, but the application is not limited to the TV stand only. For example, the invention may be applied to the box for accommodating electronic components, devices or other electronic appliances.

## Claims

1. A manufacturing method for a hollow structural member comprising:
(a) a step of pouring a molding material (16) into a die (13);
(b) a first injection step of injecting gas (17) into the material to form at least one hollow part in the material,
said method being characterised by further providing:-
(c) a second injection step of injecting a substance having a function (18) into the hollow part within the material to physically deposit a functional means onto the inside surface of the hollow part before the molding material is fully solidified;
(d) a step of solidifying both the material having the hollow part and the functional means deposited on the inside surface of the hollow part to form a structural member (21), and
(e) a step of removing the solidified structural member containing the functional means deposited on the inside surface of the hollow part from the die.

2. A method according to claim 1 wherein the first injection is performed separately from and sequentially before the second injection step.

3. A method according to any of the preceding claims, wherein the structural member is composed of an electrical insulating substance.

4. A manufacturing method according to any of the preceding claims wherein the structural member is composed of at least one kind selected from the group consisting of thermoplastic plastic, thermosetting plastic, rubber, inorganic material, ceramics, compound plastic containing filler, and biodegradable plastic.

5. A manufacturing method of hollow structural member of claims 1 or 3, wherein the molding material is composed of a thermoplastic resin, and the molding material is fused by heating.

6. A manufacturing method according to any of claims 1 or 2, wherein the structural member is composed of a compound plastic containing at least one magnetic filler and conductive filler.

7. A manufacturing method according to any one of the preceding claims, wherein the hollow structural member is formed by injection molding method.

8. A manufacturing method according to any one of the preceding claims, wherein at steps (b) and (c), by injecting the gas and the substance having the function separately at the same time, the hollow part is formed inside the material, and the functional means is formed inside of the hollow part simultaneously.

9. A manufacturing method according to any one of the preceding claims, wherein the functional means is at least one selected from the group consisting of a thin film, of a single layer, or of multiple layers.

10. A manufacturing method according to any one of the preceding claims, wherein the functional means is at least one selected from the group consisting of conductive member, magnetic member, and antibacterial member.

11. A manufacturing method according to claim 10, wherein the magnetic substance is at least one selected from the group consisting of ferrite, magnetic metal and magnetic alloy.

12. A manufacturing method according to claim 10, wherein the magnetic member is a layer in a thickness of not less than 1 micrometer.

13. A manufacturing method according to claim 10, wherein the conductive substance is composed of at least one selected from the group consisting of silver, copper, brass, iron, zinc, aluminum, nickel, stainless steel, and carbon.

14. A manufacturing method according to claim 10, wherein the antibacterial member is composed of at least one selected from the group consisting of antibacterial zeolite, chitosan, tannin, and tropolone.

15. A manufacturing method according to any one of the preceding claims, wherein the substance having the function is at least one of powder and fiber.

16. A manufacturing method according to any one of the preceding claims, wherein the substance having the function is a paint.

17. A manufacturing method according to any one of the preceding claims, wherein the step of injecting gas into the material to form a hollow part forms a plurality of holes in the material.

18. A manufacturing method according to claim 17, wherein the holes have different sizes, and holes corresponding to the position receiving a large load from outside are smaller in size.

19. A manufacturing method according to claim 17, wherein the walls isolating the holes have different thicknesses, and the walls corresponding to the position receiving a large load from outside are larger in thickness.

20. A manufacturing method according to claim 17, wherein the plurality of holes are formed as being mutually isolated by partition walls in at least one form selected from the group consisting of cross form, Y form and tee form.

21. A manufacturing method according to claim 17, wherein the plurality of holes are mutually isolated by concentric partition walls.

22. A manufacturing method according to claim 17, wherein the plurality of holes are mutually isolated by radial partition walls.

23. A manufacturing method according to any one of the preceding claims, wherein the hollow part occupies a volume in a range of 20% to 90%.

24. A manufacturing method according to any one of claims 17 to 23, wherein the plurality of holes are composed of at least one of independent holes and continuous holes.

25. A manufacturing method according to any one of the preceding claims, wherein the structural member contains a base part having an elastic function at its outside.

26. A manufacturing method according to any one of the preceding claims, wherein the structural member is a plate.

27. A hollow structural member comprising:
(a) a structural member,
(b) a plurality of hollow parts formed inside of the structural member, the plurality of hollow parts being mutually isolated by partition walls in at least one shape selected from the group consisting of cross form, Y form, tee form, concentric form and radial form, said hollow structural member being characterised in that there is further provided
(c) a functional means deposited on at least one inside surface of the plurality of hollow parts, the functional means being at least one selected from the group consisting of magnetic member, conductive member and antibacterial member.

28. A hollow structural member of claim 27, wherein the magnetic member is composed of at least one selected from the group consisting of ferrite, magnetic metal, and magnetic alloy.

29. A hollow structural member of claim 27 or 28, wherein the antibacterial member is at least one selected from the group consisting of antibacterial zeolite, chitosan, tannin and tropolone.

30. A hollow structural member of claim 27, 28 or 29 wherein the structural member is composed of compound plastic containing powder in balloon form in order to reduce the weight.

31. A hollow structural member according to any of claims 27 to 30, wherein the structural member contains at least one selected from conductive substance and magnetic substance.

32. A hollow structural member according to any of claims 27 to 31, wherein the magnetic member is a layer in a thickness of not less than 1 micrometer.

33. A hollow structural member according to any of claims 27 to 32, wherein the structural member is composed of at least one material selected from the group consisting of thermoplastic, thermosetting plastic, rubber, inorganic material, ceramics, and compound plastic containing filler.

34. A hollow structural member according to any of claims 27 to 33, wherein the plurality of hollow parts have different sizes, and those hollow parts corresponding to those positions which receive a large load from the outside are smaller in size.

35. A hollow structural member according to any of claims 27 to 34, wherein the walls include different thickness, and the walls corresponding to the position receiving a large load from outside are larger in thickness.

36. A hollow structural member according to any of claims 27 to 35, wherein the plurality of hollow parts occupies a volume in a range of 20% to 90%.

37. A hollow structural member according to any of claims 27 to 36, wherein the structural member includes a base part having an elastic function at its outside.

## Patentansprüche

1. Verfahren zum Herstellen eines hohen strukturellen Gliedes, umfassend:
(a) Einen Schritt des Eingießens eines Formmaterials (16) in eine Form (13);
(b) einen ersten Injektionsschritt des Injizierens von Gas (17) in das Material zum Formen wenigstens eines hohlen Teils in dem Material;
wobei das Verfahren **gekennzeichnet ist durch** das Durchführen:
(c) eines zweiten Injektionsschrittes des Injizierens einer Substanz, die eine Funktion (18) hat, in den hohlen Teil innerhalb des Materials, um physikalisch ein funktionelles Mittel an der innenseitigen Oberfläche des hohlen Teils abzulagern, ehe das Formmaterial voll verfestigt ist;
(d) eines Schrittes des Verfestigens sowohl des Materials, das den hohen Teil und die funktionalen, an der innenseitigen Oberfläche des hohen Teils abgelagerten Mittel aufweist zur Formung eines strukturellen Gliedes (21); und
(e) eines Schrittes des Entfernens des verfestigten strukturellen Gliedes, das die an der innenseitigen Oberfläche des hohen Teils abgelagerten funktionellen Mittel enthält, aus der Form.

2. Verfahren nach Anspruch 1, bei dem die erste Injektion getrennt von dem und sequentiell vor dem zweiten Injektionsschritt durchgeführt wird.

3. Verfahren gemäß irgendeinem der vorhergehenden Ansprüche, bei dem das strukturelle Glied gebildet ist aus einer elektrisch isolierenden Substanz.

4. Verfahren gemäß irgendeinem der vorhergehenden Ansprüche, bei dem das strukturelle Glied aus wenigstens einer Materialart besteht ausgewählt aus der Gruppe bestehend aus thermoplastischem Kunststoff, Thermosetting-Kunststoff, Gummi, anorganischem Material, Keramik, zusammengesetztem, einen Füller enthaltendem Kunststoff, und biologisch abbaubarem Kunststoff.

5. Verfahren zum Herstellen eines hohen strukturellen Gliedes gemäß den Ansprüchen 1 oder 3, bei dem das Formmaterial aus einem thermoplastischen Harz besteht, und bei dem das Formmaterial durch Erhitzen angeschmolzen wird.

6. Verfahren zum Herstellen gemäß irgendeinem der Ansprüche 1 oder 2, bei dem das strukturelle Glied beschaffen ist aus einem zusammengesetzten Kunststoff, der wenigstens einen magnetischen Füller oder einen leitfähigen Füller enthält.

7. Verfahren zum Herstellen gemäß irgendeinem der vorhergehenden Ansprüche, bei dem das hohle strukturelle Glied geformt wird mittels eines Spritzformverfahrens.

8. Verfahren zum Herstellen gemäß irgendeinem der vorhergehenden Ansprüche, bei dem in den Schritten (b) und (c) durch Injizieren des Gases und der die Funktion habenden Substanz separat und zur gleichen Zeit der hohle Teil im Inneren des Materials geformt wird, und auch die funktionellen Mittel im Inneren des hohlen Teils gleichzeitig geformt werden.

9. Verfahren zum Herstellen gemäß irgendeinem der vorhergehenden Ansprüche, bei dem die funktionellen Mittel wenigstens eines ausgewählt aus der folgenden Gruppe sind, bestehend aus einem dünnen Film, aus einer einfachen Lage, oder aus mehreren Lagen.

10. Verfahren zum Herstellen gemäß irgendeinem der vorhergehenden Ansprüche, bei dem die funktionellen Mittel irgendein Glied ausgewählt aus der folgenden Gruppe sind, bestehend aus einem leitfähigen Glied, einem magnetischen Glied, und einem antibakteriellen Glied.

11. Verfahren zum Herstellen gemäß Anspruch 10, bei dem die magnetische Substanz wenigstens eine Substanz ist ausgewählt aus der Gruppe bestehend aus Ferrit, magnetischem Metall und magnetischer Legierung.

12. Verfahren zum Herstellen gemäß Anspruch 10, bei dem das magnetische Glied eine Schicht mit einer Dicke von nicht weniger als 1 µm ist.

13. Verfahren zum Herstellen gemäß Anspruch 10, bei dem die leitfähige Substanz besteht aus wenigstens einem Material, ausgewählt aus der Gruppe bestehend aus Silber, Kupfer, Messing, Eisen, Zink, Aluminium, Nickel, rostfreiem Stahl, und Kohlenstoff.

14. Verfahren zum Herstellen gemäß Anspruch 10, bei dem das antibakterielle Glied zusammengesetzt ist aus wenigstens einem Material ausgewählt aus der Gruppe bestehend aus antibakteriellem Zeolith, Chitosan, Tannin, und Tropolon.

15. Verfahren zum Herstellen gemäß irgendeinem der vorhergehenden Ansprüche, bei dem die Substanz, die die Funktion hat, wenigstens ein Pulver oder eine Faser ist.

16. Verfahren zum Herstellen gemäß irgendeinem der vorhergehenden Ansprüche, bei dem die eine Funktion aufweisende Substanz eine Farbe ist.

17. Verfahren zum Herstellen gemäß irgendeinem der vorhergehenden Ansprüche, bei dem der Schritt des Injizierens von Gas in das Material zur Formung eines hohlen Teils in dem, Material eine Vielzahl von Löchern formt.

18. Verfahren zum Herstellen gemäß Anspruch 17, bei dem die Löcher unterschiedliche Größen haben, und bei dem Löcher, korrespondierend mit ihrer Position zum Erhalt einer großen Ladung von außerhalb in ihrer Größe kleiner sind.

19. Verfahren zum Herstellen gemäß Anspruch 17, bei dem die Wände, die die Löcher isolieren, unterschiedliche Dicken haben, und bei dem Wände korrespondierend mit der Position zum Empfangen einer größeren Ladung von außerhalb in ihrer Dicke größer sind.

20. Verfahren zum Herstellen gemäß Anspruch 17, bei dem die Vielzahl der Löcher so geformt ist, daß sie gegenseitig durch Trennwände in wenigstens einer Form isoliert sind ausgewählt aus der Gruppe bestehend aus einer Kreuzform, einer Y-Form und einer T-Form.

21. Verfahren zum Herstellen gemäß Anspruch 17, bei dem die Vielzahl der Löcher voneinander isoliert sind durch konzentrische Trennwände.

22. Verfahren zum Herstellen gemäß Anspruch 17, bei dem die Vielzahl der Löcher voneinander isoliert sind durch radiale Trennwände.

23. Verfahren zum Herstellen gemäß irgendeinem der vorhergehenden Ansprüche, bei dem der hohle Teil ein Volumen in einem Bereich von 20 % bis 90 % beansprucht.

24. Verfahren zum Herstellen gemäß irgendeinem der vorhergehenden Ansprüche 17 bis 23, bei dem die Vielzahl der Löcher besteht aus zumindest einem von unabhängigen Löcher und kontinuierlichen Löchern.

25. Verfahren zum Herstellen gemäß irgendeinem der vorhergehenden Ansprüche, bei dem das strukturelle Glied einen Basisteil enthält, der an seiner Außenseite eine elastische Funktion hat.

26. Verfahren zum Herstellen gemäß irgendeinem der vorhergehenden Ansprüche, bei dem das strukturelle Glied eine Platte ist.

27. Hohles strukturelles Glied, aufweisend:
(a) ein strukturelles Glied,
(b) eine Vielzahl hohler Teile, die im Inneren des strukturellen Gliedes geformt sind, wobei die Vielzahl der hohlen Teile gegeneinander isoliert sind durch Trennwände mit wenigstens einer Form ausgewählt aus der Gruppe bestehend aus einer Kreuzform, einer Y-Form, einer T-Form, einer konzentrischen Form und einer radialen Form, wobei das hohle, strukturelle Glied **gekennzeichnet ist dadurch**, daß weiterhin vorgesehen sind
(c) ein funktionelles Mittel, das an wenigstens einer innenseitigen Oberfläche der Vielzahl der hohen Teile abgelagert ist, wobei das funktionelle Mittel wenigstens eines ist ausgewählt aus der Gruppe bestehend aus einem magnetischen Glied, einem leitfähigen Glied und einem antibakteriellen Glied.

28. Hohles strukturelles Glied gemäß Anspruch 27, bei dem das magnetische Glied besteht aus wenigstens einem Material ausgewählt aus der Gruppe bestehend aus Ferrit, magnetischem Metall, und magnetischer Legierung.

29. Hohles strukturelles Glied gemäß Anspruch 27 oder 28, bei dem das antibakterielle Glied wenigstens eines ist ausgewählt aus der Gruppe bestehend aus antibakteriellem Zeolith, Chitosan, Tannin und Tropolon.

30. Hohles strukturelles Glied nach Anspruch 27, 28 oder 29, bei das strukturelle Glied zusammengesetzt ist aus zusammengesetztem Kunststoff, enthaltend Pulver in Ballonform, um das Gewicht zu reduzieren.

31. Hohles strukturelles Glied gemäß irgendeinem der Ansprüche 27 bis 30, bei dem das strukturelle Glied wenigstens eine Substanz enthält, ausgewählt aus einer leitfähigen Substanz und einer magnetischen Substanz.

32. Hohle strukturelles Glied gemäß irgendeinem der Ansprüche 27 bis 31, bei dem das magnetische Glied eine Schicht mit einer Dicke von nicht weniger als 1 µm ist.

33. Hohles strukturelles Glied gemäß irgendeinem der Ansprüche 27 bis 32, bei dem das strukturelle Glied beschaffen ist aus wenigstens einem Material ausgewählt aus der Gruppe bestehend aus thermoplastischem oder Thermosetting-Kunststoff, Gummi, anorganischem Material, Keramik, und zusammengesetztem Kunststoff enthaltend einen Füller.

34. Hohles strukturelles Glied gemäß irgendeinem der Ansprüche 27 bis 33, bei dem die Vielzahl der hohlen Teile unterschiedliche Größen hat und diejenigen hohlen Teile in ihrer Größe kleiner sind, die mit denjenigen Positionen korrespondieren, die von außen eine große Ladung erhalten.

35. Hohles strukturelles Glied gemäß irgendeinem der Ansprüche 27 bis 34, bei dem die Wände unterschiedliche Dicken umfassen und die Wände in ihrer Dicke größer sind, die korrespondieren mit Positionen, an denen eine große Ladung von außen erhalten wird.

36. Hohles strukturelles Glied gemäß irgendeinem der Ansprüche 27 bis 35, bei dem die Vielzahl der hohlen Teile ein Volumen in einem Bereich von 20 % bis 90 % beanspruchen.

37. Hohles strukturelles Glied gemäß irgendeinem der Ansprüche 27 bis 36, bei dem das strukturelle Glied einen Basisteil umfaßt, der an seiner Außenseite eine elastische Funktion hat.

## Revendications

1. Procédé de fabrication d'un organe creux de construction, comprenant :
(a) une étape de coulée d'un matériau à mouler (16) dans un moule (13),
(b) une première étape d'injection d'un gaz (17) dans le matériau pour la formation d'au moins une partie creuse dans le matériau,
le procédé étant caractérisé en ce qu'il comporte en outre :
(c) une seconde étape d'injection d'une substance ayant une fonction (18) dans la partie creuse formée dans le matériau afin qu'un dispositif fonctionnel soit physiquement déposé à la surface interne de la partie creuse avant que le matériau à mouler ne soit totalement solidifié,
(d) une étape de solidification à la fois du matériau ayant la partie creuse et du dispositif fonctionnel déposé à la surface interne de la partie creuse pour la formation d'un organe de construction (21), et
(e) une étape d'extraction de l'organe solidifié de construction contenant le dispositif fonctionnel déposé à la surface interne de la partie creuse, à l'extérieur du moule.

2. Procédé selon la revendication 1, dans lequel la première injection est réalisée séparément de la seconde et successivement à la seconde.

3. Procédé selon l'une quelconque des revendications précédentes, dans lequel l'organe de construction est composé d'une substance isolante de l'électricité.

4. Procédé de fabrication selon l'une quelconque des revendications précédentes, dans lequel l'organe de construction est composé d'au moins un type de matériau choisi dans le groupe comprenant une matière plastique thermoplastique, une matière plastique thermodurcissable, un caoutchouc, une matière minérale, une céramique, une matière plastique composite contenant une charge et une matière plastique biodégradable.

5. Procédé de fabrication d'un organe creux de construction selon la revendication 1 ou 2, dans lequel le matériau à mouler est composé d'une résine thermoplastique, et le matériau à mouler est associé par fusion par chauffage.

6. Procédé de fabrication selon l'une des revendications 1 et 2, dans lequel l'organe de construction est composé d'une matière plastique composite contenant au moins une charge magnétique et une charge conductrice.

7. Procédé de fabrication selon l'une quelconque des revendications précédentes, dans lequel l'organe creux de construction est formé par un procédé de moulage par injection.

8. Procédé de fabrication selon l'une quelconque des revendications précédentes, dans lequel, dans les étapes (b) et (c), par injection du gaz et de la substance ayant la fonction, séparément et en même temps, la partie creuse est formée à l'intérieur du matériau, et le dispositif fonctionnel est formé à l'intérieur de la partie creuse simultanément.

9. Procédé de fabrication selon l'une quelconque des revendications précédentes, dans lequel le dispositif fonctionnel est au moins un dispositif choisi dans le groupe formé par un film mince, une couche unique ou plusieurs couches.

10. Procédé de fabrication selon l'une quelconque des revendications précédentes, dans lequel le dispositif fonctionnel est un dispositif au moins choisi dans le groupe formé par un organe conducteur, un organe magnétique et un organe bactéricide.

11. Procédé de fabrication selon la revendication 10, dans lequel la substance magnétique est au moins une substance choisie dans le groupe formé par une ferrite, un métal magnétique et un alliage magnétique.

12. Procédé de fabrication selon la revendication 10, dans lequel l'organe magnétique est une couche ayant une épaisseur qui n'est pas inférieure à 1 µm.

13. Procédé de fabrication selon la revendication 10, dans lequel la substance conductrice est composée d'au moins une substance choisie dans le groupe formé par l'argent, le cuivre, le laiton, le fer, le zinc, l'aluminium, le nickel, l'acier inoxydable et le carbone.

14. Procédé de fabrication selon la revendication 10, dans lequel l'organe bactéricide est composé d'au moins un élément du groupe formé par une zéolite bactéricide, du chitosane, un tannin et la tropolone.

15. Procédé de fabrication selon l'une quelconque des revendications précédentes, dans lequel la substance ayant la fonction est au moins une substance choisie parmi une poudre et une fibre.

16. Procédé de fabrication selon l'une quelconque des revendications précédentes, dans lequel la substance ayant la fonction est une peinture.

17. Procédé de fabrication selon l'une quelconque des revendications précédentes, dans lequel l'étape d'injection de gaz dans le matériau pour la formation d'une partie creuse forme plusieurs trous dans le matériau.

18. Procédé de fabrication selon la revendication 17, dans lequel les trous ont des dimensions différentes, et les trous correspondant à la position qui reçoit une force importante depuis l'extérieur ont une dimension plus petite.

19. Procédé de fabrication selon la revendication 17, dans lequel les parois isolant les trous ont des épaisseurs différentes, et les parois correspondant à la position recevant une force importante depuis l'extérieur ont une épaisseur plus grande.

20. Procédé de fabrication selon la revendication 17, dans lequel les trous sont formés en étant isolés mutuellement par des parois formant des cloisons sous une forme au moins choisie dans le groupe comprenant une forme en croix, une forme en Y et une forme en T.

21. Procédé de fabrication selon la revendication 17, dans lequel les trous sont isolés mutuellement par les parois concentriques de cloisonnement.

22. Procédé de fabrication selon la revendication 17, dans lequel les trous sont isolés mutuellement par des parois radiales de cloisonnement.

23. Procédé de fabrication selon l'une quelconque des revendications précédentes, dans lequel la partie creuse occupe un volume compris entre 20 % et 90 %.

24. Procédé de fabrication selon l'une quelconque des revendications 17 à 23, dans lequel les trous sont composés de trous choisis au moins parmi des trous indépendants et des trous continus.

25. Procédé de fabrication selon l'une quelconque des revendications précédentes, dans lequel l'organe de construction contient une partie de base ayant une fonction élastique à l'extérieur.

26. Procédé de fabrication selon l'une quelconque des revendications précédentes, dans lequel l'organe de construction est une plaque.

27. Organe creux de construction, comprenant :
(a) un organe de construction,
(b) plusieurs parties creuses formées dans l'organe de construction, les parties creuses étant isolées mutuellement par des parois de cloisonnement ayant au moins une configuration choisie dans le groupe constitué par une forme en croix, une forme en Y, une forme en T, une forme concentrique et une forme radiale, l'organe creux de construction étant caractérisé en ce qu'il comporte en outre
(c) un dispositif fonctionnel déposé sur au moins une surface interne des parties creuses, le dispositif fonctionnel étant d'au moins un type choisi dans le groupe comprenant un organe magnétique, un organe conducteur et un organe bactéricide.

28. Organe creux de construction selon la revendication 27, dans lequel l'organe magnétique est composé d'au moins un élément choisi dans le groupe formé par une ferrite, un métal magnétique et un alliage magnétique.

29. Organe creux de construction selon la revendication 27 ou 28, dans lequel l'organe bactéricide est au moins un élément choisi dans le groupe formé par une zéolite bactéricide, le chitosane, un tannin et la tropolone.

30. Organe creux de construction selon la revendication 27, 28 ou 29, dans lequel l'organe de construction est composé d'une matière plastique composite contenant une poudre sous forme de ballons afin que le poids soit réduit.

31. Organe creux de construction selon l'une quelconque des revendications 27 à 30, dans lequel l'organe de construction contient au moins une substance choisie parmi une substance conductrice et une substance magnétique.

32. Organe creux de construction selon l'une quelconque des revendications 27 à 31, dans lequel l'organe magnétique est une couche dont l'épaisseur n'est pas inférieure à 1 µm.

33. Organe creux de construction selon l'une quelconque des revendications 27 à 32, dans lequel l'organe de construction est composé d'au moins un matériau choisi dans le groupe comprenant les matières thermoplastiques, les matières plastiques thermodurcissables, le caoutchouc, les matières minérales, les céramiques et les matières plastiques composites contenant une charge.

34. Organe creux de construction selon l'une quelconque des revendications 27 à 33, dans lequel plusieurs parties creuses ont des dimensions différentes, et ces parties creuses qui correspondent aux positions qui reçoivent une force importante depuis l'extérieur ont une dimension plus petite.

35. Organe creux de construction selon l'une quelconque des revendications 27 à 34, dans lequel les parois ont des épaisseurs différentes, et les parois correspondant à la position qui reçoit une force importante depuis l'extérieur ont une épaisseur plus grande.

36. Organe creux de construction selon l'une quelconque des revendications 27 à 35, dans lequel les parties creuses occupent un volume compris entre 20 % et 90 %.

37. Organe creux de construction selon l'une quelconque des revendications 27 à 36, dans lequel l'organe de construction comporte une partie de base ayant une fonction élastique à l'extérieur.
